(19) Europäisches Patentamt
European Patent Office
Office européen des brevets

(11) Veröffentlichungsnummer: **0 247 480 B1**

# (12) EUROPÄISCHE PATENTSCHRIFT

(45) Veröffentlichungstag der Patentschrift: **23.06.93**

(51) Int. Cl.5: **C08K 5/34**, C08L 69/00, B29C 47/04

(21) Anmeldenummer: **87107159.3**

(22) Anmeldetag: **18.05.87**

Die Akte enthält technische Angaben, die nach dem Eingang der Anmeldung eingereicht wurden und die nicht in dieser Patentschrift enthalten sind.

## (54) Verzweigte thermoplastische Polycarbonate mit verbessertem Schutz gegen UV-Licht.

(30) Priorität: **28.05.86 DE 3617978**

(43) Veröffentlichungstag der Anmeldung:
**02.12.87 Patentblatt 87/49**

(45) Bekanntmachung des Hinweises auf die Patenterteilung:
**23.06.93 Patentblatt 93/25**

(84) Benannte Vertragsstaaten:
**AT BE DE ES FR GB IT NL SE**

(56) Entgegenhaltungen:
**EP-A- 0 110 238**
**DE-A- 1 670 951**
**DE-A- 2 500 092**
**US-A- 3 544 514**

(73) Patentinhaber: **BAYER AG**

**W-5090 Leverkusen 1 Bayerwerk(DE)**

(72) Erfinder: **Paul, Winfried, Dr.**
**Mobay Corp. Bdg. 8 Mobay Road**
**Pittsburgh, PA 15205(US)**
Erfinder: **Buysch, Hans-Josef, Dr.**
**Brandenburger Strasse 28**
**W-4150 Krefeld(DE)**
Erfinder: **Nising, Wolfgang, Dr.**
**Mainstrasse 4**
**W-5205 St. Augustin 2(DE)**
Erfinder: **Scholl, Thomas, Dr.**
**Witzfeldstrasse 47a**
**W-4005 Meerbusch(DE)**

EP 0 247 480 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind verzweigte, thermoplastische Polycarbonate, die dadurch gekennzeichnet sind, daß sie Hydroxybenzotriazole der Formel I

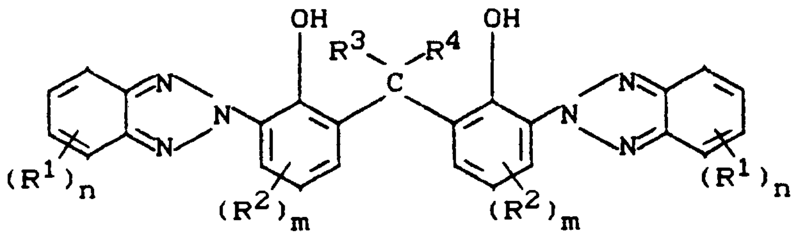

I

enthalten,

worin

$R^1$ = H, $R^2$ = H oder $C_1$-$C_9$-Alkyl, $R^3$ = H, $R^4$ = H "m" = 1 und "n" = 1 sind.

Unter Bedingungen der Bewitterung, in Gegenwart von Luft, Feuchtigkeit und Licht insbesondere UV-Licht, werden thermoplastische Polycarbonate abgebaut, was an der Verschlechterung mechanischer Eigenschaften, wie Schlagzähigkeit, Kerbschlagzähigkeit oder der Bruchfestigkeit bei mehraxialen Beanspruchungen, allgemein an einer Versprödung zu erkennen ist.

Es ist bekannt, aromatische Polycarbonate mit UV-Absorbern vom Typ der Hydroxybenzotriazole der Formel II, beispielsweise IIa oder IIb,

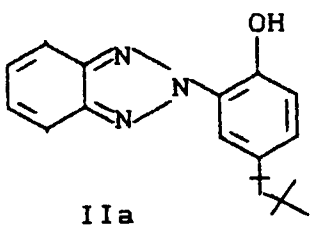

IIa

2-(2'-Hydroxy-4'-tert. octylphenyl)-benzotriazol

oder

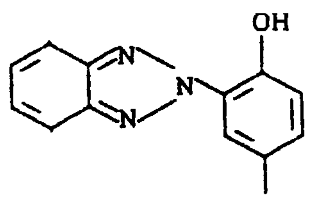

IIb

2-(2'-Hydroxy-4'-methyl-phenyl)-benzotriazol

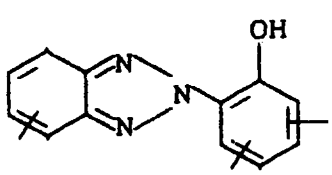

II

gegen die abbauenden Einwirkungen von UV-Strahlen bei der Bewitterung zu schützen.

(Vergleiche Taschenbuch der Kunststoffadditive Hrsg. V.R. Gächter, H. Müller, Carl Hauser Verlag München, Wien, 1983, S. 183 ff.).

Es wurde festgestellt, daS verzweigte Polycarbonate, die von großer Bedeutung sind zur Herstellung großvolumiger, maßhaltiger Teile durch Extrusion, unter den gleichen Bedingungen in Anwesenheit derselben üblichen Hydroxybenzotriazol-UV-Absorber rascher verspröden als linear aufgebaute Polycarbonate. Dies erscheint auch verständlich, da bei photochemischen Prozessen nicht nur Molekülspaltungen, sondern auch Verzweigungen eine Rolle spielen. Versprödungen sind aber nicht nur die Folge von Molekülabbauvorgängen, sondern werden auch durch Verzweigungs- und schließlich Vernetzungsreaktionen hervorgerufen. Verzweigtes Polycarbonat bringt demnach gegenüber dem linearen schon Voraussetzungen für den früheren Sprödbruch mit.

Nun wurde gefunden, daS Benzotriazolderivate der Struktur I den UV-Schutz der verzweigten Polycarbonate verbessern.

Dies muß umso mehr überraschen, als sich die Stabilisatoren der Formel I in linearen Polycarbonaten bezüglich der Schutzwirkung nicht von üblicherweise verwendeten Vertretern dieser Stoffklasse unterscheiden.

Demnach bestand keine Veranlassung, gängige Benztriazol-UV-Absorber durch diejenigen der Formel I zu ersetzen.

Hydroxy-benzotriazole der Struktur I sind bekannt, und ihre Herstellung ist in der DE-A 1 670 951 und in der Tschechischen Patentschrift 146 360 beschrieben. Gegenüber den Hydroxybenzotriazolen der Formel II zeichnen sie sich durch außerordentliche Sublimationsfestigkeit, also durch geringe Flüchtigkeit bei hoher Temperatur aus.

Erfindungsgemäß zu stabilisierende, verzweigte thermoplastische aromatische Polycarbonate sind solche auf Basis von Diphenolen, trifunktionellen oder tetrafunktionellen oder mehr als tetrafunktionellen Verzweigern und üblichen Kettenabbrechern.

Diphenole können in o- und/oder m-Stellung zu den beiden phenolischen OH-Gruppen noch Alkylsubstituenten oder Halogensubstituenten haben.

Die zu stabilisierenden Polycarbonate haben mittlere Molekulargewichte $\overline{M}w$ zwischen 10 000 und 100 000, vorzugsweise zwischen 20 000 und 40 000, ermittelt durch Messungen der rel. Viskosität in $CH_2Cl_2$ bei 25 °C und einer Konzentration von 0,5 Gew.-%. Geeignete Diphenole sind beispielsweise Hydrochinon, Resorcin, 4,4'-Dihydroxy-diphenyl, Bis-(hydroxy-phenyl)-alkane, wie beispielsweise $C_1$-$C_8$-Alkylen- bzw. $C_2$-$C_8$-Alkylidenbisphenole, Bis(-hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha$'-Bis-(hydroxy-phenyl)-diisopropylbenzol sowie die entsprechenden kernalkylierten bzw. kernhalogenierten Verbindungen. Bevorzugt sind Polycarbonate auf der Basis von Bis-(4-hydroxy-phenyl)-propan-2,2, (Bisphenol A), Bis-(4-hydroxy-3,5-dichlor-phenyl)-propan-2,2 (Tetrachlorbisphenol A), Bis-(4-hydroxy-3,5-dibromphenyl)-propan-2,2 (Tetrabrombisphenol A), Bis-(4-hydroxy-3,5-dimethyl-phenyl)-propan-2,2 (Tetramethylbisphenol A), Bis-(4-hydroxyphenyl)-cyclohexan-1,1 (Bisphenol Z), Bis-(4-hydroxy-3,5-dimethyl-phenyl)-sulfon (Dixylenolsulfon) sowie auf der Basis von Dreikernbisphenolen wie $\alpha,\alpha$'-Bis-(4-hydroxyphenyl)-p-diisopropylbenzol und Mischungen dieser Verbindungen.

Weitere für die Herstellung von verzweigten Polycarbonaten geeignete Bisphenole sind in den US-Patenten 3 028 365, 2 999 835, 3 148 172, 2 970 131, 2 991 273, 3 271 367 und 2 999 846 beschrieben.

Als Verzweiger sind solche mit drei oder vier oder mehr als vier funktionellen Gruppen, insbesondere solche mit drei oder mehr als drei phenolischen Hydroxylgruppen einsetzbar, wobei die üblicherweise bekannten Mengen an Verzweiger zwischen 0,05 und 2 Mol-%, bezogen auf eingebaute Diphenole, einzuhalten sind.

Einige der verwendbaren Verzweiger mit drei oder mehr als drei phenolischen Hydroxylgruppen sind beispielsweise 2,4-Bis-(4-hydroxphenyl-isopropyl)-phenol, 2,6-Bis-(2'-hydroxy-5'-methyl-benzyl)-4-methylphenol, 2-(4-hydroxyphenyl)-2-(2,4-Dihydroxyphenyl)-propan und 1,4-Bis-(4,4'-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Die Herstellung der verzweigten Polycarbonate erfolgt nach bekannten Herstellungsverfahren für aromatische thermoplastische Polycarbonate, und zwar entweder nach dem Umesterungsverfahren in der Schmelze mit Diphenylcarbonat oder nach dem Zweiphasengrenzflächenverfahren mit Phosgen. (Siehe dazu beispielsweise "H. Schnell, Chemistry and Physics of Polycarbonates, Polymer Rev., Vol. IX, Seite 27 ff., Interscience Publishers New York, 1964, DE-OS 1 570 533, DE-OS 1 595 762, DE-PS 2 500 092 und US-PS 3 544 514 bzw. US-RE 27 682).

Die Reaktionsbedingungen für beide Herstellungsvarianten sind geläufig.

Als Kettenabbrecher bei der Herstellung nach dem Zweiphasengrenzflächenverfahren sind aromatische Verbindungen mit einer funktionellen Gruppe wie aromatische Säurehalogenide oder Phenole, insbesondere die üblicherweise gebräuchlichen Phenole wie beispielsweise p-tert.-Butylphenol, p-Chlorphenol, 2,4,6-Tribromphenol und Phenol in der üblichen Menge einsetzbar, die sich nach dem jeweils einzustellenden Molekulargewicht der verzweigten Polycarbonate bestimmt. Im allgemeinen werden 0,5 Mol-% bis 10,0 Mol-%, bezogen auf eingesetzte Diphenole, eingesetzt.

Die verzweigten Polycarbonate werden erfindungsgemäß mit 0,05 Gew.-% bis 15 Gew.-% der UV-Absorber der Formel I versetzt. Sie werden mit üblichen Mischaggregaten wie Walzen, Knetern, Ein- und Mehrwellenextrudern in die Polycarbonate eingearbeitet.

Darüber hinaus können weitere Zuschläge üblicher Art wie Verstärker und Füllstoffe, Flammschutzmittel, Farbstoffe und Pigmente sowie Gleit- und Entformungsmittel dem Polycarbonat zugegeben werden.

Gegenstand der vorliegenden Erfindung ist somit auch ein Verfahren zur Stabilisierung von verzweigten, thermoplastischen Polycarbonaten, das dadurch gekennzeichnet, ist, daß man 0,05 Gew.-% bis 15 Gew.-% an UV-Absorber der Formel I sowie gegebenenfalls Verstärkungsstoffe, Füllstoffe, Flammschutzmittel, Farbstoffe, Pigmente, Gleitmittel und/oder Entformungsmittel mit üblichen Mischaggregaten, wie Walzen, Knetern, Einwellenextrudern oder Mehrwellenextrudern, in die verzweigten, thermoplastischen Polycarbonate einarbeitet.

Bevorzugte Verstärkungsstoffe sind Glasfasern.

Die so stabilisierten Polycarbonate können zu Fasern, Folien, Platten, Spritzguß- und Extrusionsartikeln in bekannter Weise verarbeitet werden. Durch Extrusion können beispielsweise massive Platten oder Stegmehrfachplatten hergestellt werden, die als Verscheibungen im Hoch- und Gewächshausbau Verwendung finden. Hierfür werden erfindungsgemäß 0,05 Gew.-% bis 1 Gew.-%, vorzugsweise 0,2 Gew.-% bis 0,8 Gew.-% UV-Absorber der Formel I enthaltende verzweigte Polycarbonate eingesetzt.

Eine Anwendung der erfindungsgemäß gegen UV-Licht stabilisierten Polycarbonate ist weiterhin die Herstellung von mehrschichtigen Kunststofftafeln nach dem (Mehrfach-) Koextrusionsverfahren, bei dem die tragende Kernschicht aus Kunststoff, beispielsweise aus ABS, linearem oder verzweigtem Polystyrol, vorzugsweise verzweigtem Polycarbonat besteht und auf einer oder beiden Seiten der Kernschicht UV-Absorptionsschichten aus verzweigtem Polycarbonat aufgebracht werden, die 1 Gew.-% bis 15 Gew.-%, vorzugweise 5 Gew.-% bis 10 Gew.-% des UV-Absorbers der Formel I enthalten.

Die Schichtdicke der UV-Absorptionsschicht soll 10 µm bis 50 µm, vorzugweise 20 µm bis 40 µm betragen.

Auf die der Kernschicht abgewandten Seite der UV-Absorptionsschicht kann eine weitere, im wesentlichen UV-absorberfreie Deckschicht von 10-30 µm, vorzugweise 10-20 µm Dicke aufgebracht werden.

Die Verfahren und Apparaturen der Einfach- bzw. Mehrfachkoextrusion sind aus der DE-A 2 832 676 bekannt.

Aus der EP-A 110 238 ist die Auftragung einer UV-Absorptionsschicht bekannt, die einen bei hohen Temperaturen flüchtigen UV-Absorber enthält.

Gegenstand der vorliegenden Erfindung ist somit auch die Verwendung der erfindungsgemäßen, verzweigten Polycarbonate zur Herstellung von Platten, wie massive Platten oder Stegmehrfachplatten, wobei der Gehalt an Hydroxybenzotriazol der Formel I 0,05 Gew.-% bis 1 Gew.-%, vorzugsweise 0,2 Gew.-% bis 0,8 Gew.-% beträgt.

Gegenstand der vorliegenden Erfindung ist außerdem die Verwendung der erfindungsgemäßen, verzweigten Polycarbonate zur Herstellung von mehrschichtigen Kunststofftafeln, wobei die Schichtdicken der UV-Absorptionsschicht 10 µm bis 50 µm, vorzugweise 20 µm bis 40 µm betragen und der Gehalt an Hydroxybenzotriazol der Formel I 1 Gew.-% bis 15 Gew.-%, vorzugsweise 5 Gew.-% bis 10 Gew.-% in der UV-Absorptionsschicht beträgt.

Gegenstand der vorliegenden Erfindung ist außerdem ein Verfahren zur Herstellung von mehrschichtigen Kunststofftafeln nach dem (Mehrfach-)Koextrusionsverfahren, das dadurch gekennzeichnet ist, daß die tragende Kernschicht aus thermoplastischem Kunststoff besteht und auf einer oder beiden Seiten der Kernschicht UV-Absorptionsschichten aus verzweigtem, thermoplastischem Polycarbonat, die 1 Gew.-% bis 15 Gew.-%, vorzugsweise 5 Gew.-% bis 10 Gew.-% an UV-Absorber der Formel I enthalten und eine Dicke von 10 µm bis 50 µm, vorzugsweise von 20 µm bis 40 µm aufweisen, in bekannter Weise aufgebracht werden.

Beispiele

I = UV-Absorber Tinuvin 350 (der Fa. Ciba Geigy)

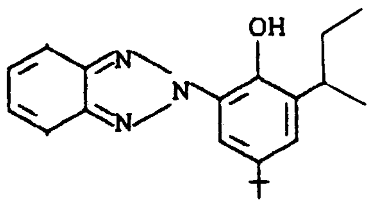

II =

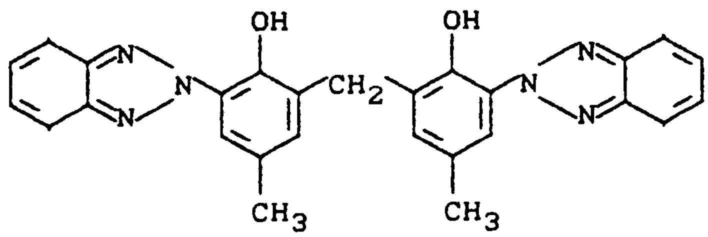

Polycarbonat linear =
mit Phenol als Kettenabbrecher geregeltes Polycarbonat auf Basis Bisphenol A mit einer rel. Lösungsviskosität von 1,29 (gemessen bei 25 ° C in 0,5 %iger Lösung in Dichlormethan).

Polycarbonat verzweigt =
mit Phenol als Kettenabbrecher geregeltes, mit 0,3 Mol-% (bezogen auf Bisphenol) 3,3-Bis-(4-hydroxy-3-methylphenyl)-2-oxo-2,3-dihydroindol verzweigtes Polycarbonat auf Basis Bisphenol A mit einer rel. Lösungsviskosität von 1,32 (gemessen bei 25 ° C in 0,5 %iger Lösung in Dichlormethan).

Die UV-Absorber wurden zu 0,3 Gew.-% bei 290 ° und 80 U/m auf einem Doppelwellenextruder (ZSK 32, Werner und Pfleiderer) in die Polycarbonate eingearbeitet und das Extrudat granuliert. Auf einer Spritzgußmaschine ("Idra") wurden aus diesen Compounds Platten von 25 cm Länge, 5 cm Breite und 1 mm Dicke hergestellt.

Die Bewitterung dieser Platten erfolgte im Weather-o-meter der Fa. Atlas, USA mit einem 6,5 W-Xenon-Brenner bei einem Zyklus von 102 min Belichtung und 18 min Besprühung mit entmineralisiertem Wasser unter Belichtung. Die maximale Schwarztafeltemperatur betrug 60 +/-5 ° C. Nach je 1000 h wurden die Platten abgemustert und zur praxisnahen Prüfung der Zähigkeit ein an Stegmehrfachplatten in Anlehnung an DIN 53 443 entwickelter, modifizierter Kugelfallversuch durchgeführt, bei dem ein Durchstoßkörper von 5 mm Durchmesser ähnliche biaxiale Beanspruchung hervorrufen soll wie ein herabfallendes Hagelkorn. Bei Raumtemperatur schlägt eine Fallmasse von 36 kg aus 0,2 m Fallhöhe auf die Probekörper, die auf einem Auflagering von 20 mm Innendurchmesser frei aufliegen.

Dabei wird mit der bewitterten Seite des Probekörpers in Druckzone geprüft. Das Bruchbild (BB) wird durch Zahlen charakterisiert: 1 = splitternd, 2 = glatter Riß, 3 = zähspröd, 4 = zäh.

Als Yellowness Index (YI) wird der nach DIN 6167 ermittelte Gelbwert angegeben.

Die Ergebnisse sind in der folgenden Tabelle zusammengefaßt.

| Versuch | UV-Absorber | Polycarbonat | Bewitterung Xenon WOM 0 h | 2000 h | 3000 h | Meßgrößen |
|---|---|---|---|---|---|---|
| A 1 | I | linear | 3,10 | 10,18 | 9,25 | YI |
| | | | 4x4 | 4x4 | 4x4 | BB |
| A 2 | II | linear | 4,72 | 10,74 | 8,72 | YI |
| | | | 4x4 | 4x4 | 4x4 | BB |
| B 1 | I | verzweigt | 3,67 | 11,64 | 10,84 | YI |
| | | | 4x4 | 2x3/2x4 | 2x3/2x4 | BB |
| B 2 | II | verzweigt | 3,64 | 11,42 | 9,23 | YI |
| | | | 4x4 | 4x4 | 4x4 | BB |

Es ergibt sich:

1. Die Schädigung am linearen Polycarbonat ist in Gegenwart des UV-Absorbers I nicht wesentlich anders als in der des Absorbers II; dies gilt insbesondere für die bei langer Bewitterung gemessenen Werte (2000 h - und 3000 h-Werte).
2. Anders sehen die Werte aus, wenn man die Bewitterungsergebnisse am verzweigten Polycarbonat betrachtet.

Mit dem UV-Absorber I (üblich) findet man im Verlaufe der Bewitterung eine ständig wachsende Schädigung, so daß nach 2000 und 3000 h Bewitterung jeweils zur Hälfte Sprödbuch zu verzeichnen ist,

während der Absorber II (erfindungsgemäß) das Polycarbonat besser schützt, so daß beim Durchstoß nur zähes Verhalten gefunden wird.

**Patentansprüche**

1. Verzweigte, thermoplastische Polycarbonate, dadurch gekennzeichnet, daß sie Hydroxybenzotriazole der Formel I in Mengen von 0,05 Gew.-% bis 15 Gew.-%

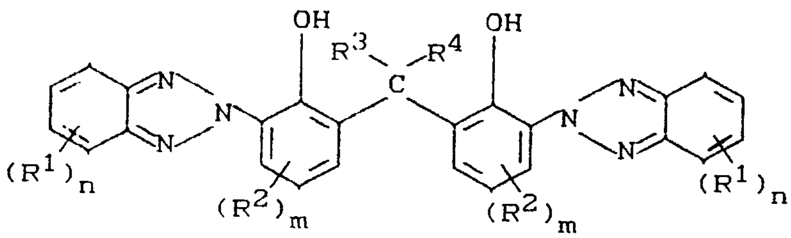

I

enthalten,
worin
$R^1$ = H, $R^2$ = H oder $C_1$-$C_9$-Alkyl, $R^3$ = H, $R^4$ = H "m" = 1 und "n" = 1 sind.

2. Verwendung von Polycarbonaten des Anspruchs 1 zur Herstellung von Platten, wobei der Gehalt an Hydroxybenzotriazole der Formel I 0,05 Gew.-% bis 1 Gew.-% beträgt.

3. Verwendung gemäß Anspruch 2, wobei der Gehalt an Hydroxybenzotriazol der Formel I 0,2 Gew.-% bis 0,8 Gew.-% beträgt.

4. Verwendung der Polycarbonate des Anspruchs 1 zur Herstellung von mehrschichtigen Kunststofftafeln, wobei die Schichtdicke der UV-Absorptionsschicht 10 µm bis 50 µm beträgt und der Gehalt an Hydroxbenzotriazol der Formel I 1 Gew.-% bis 15 Gew.-% in der UV-Absorptionsschicht beträgt.

5. Verwendung gemäß Anspruch 4, wobei der Gehalt an Hydroxybenzotriazol der Formel I 5 Gew.-% bis 10 Gew.-% in der UV-Absorptionsschicht beträgt.

6. Verfahren zur Stabilisierung von verzweigten, thermoplastischen Polycarbonaten, dadurch gekennzeichnet, daß man 0,05 Gew.-% bis 15 Gew,-% an UV-Absorber der Formel I des Anspruchs 1 sowie gegebenenfalls Verstärkungsstoffe, Füllstoffe, Flammschutzmittel, Farbstoffe, Pigmente, Gleitmittel und/oder Entformungsmittel mit üblichen Mischaggregaten in die verzweigten, thermoplastischen Polycarbonate einarbeitet.

7. Verfahren zur Herstellung von mehrschichtigen Kunststofftafeln nach dem (Mehrfach-)Koextrusionsverfahren, dadurch gekennzeichnet, daß die tragende Kernschicht aus thermoplastischem Kunststoff besteht und auf einer oder beiden Seiten der Kernschicht UV-Absorptionsschichten aus verzweigtem, thermoplastischem Polycarbonat, die 1 Gew,-% bis 15 Gew.-% an UV-Absorber der Formel I des Anspruchs 1 enthalten und eine Dicke von 10 µm bis 50 µm aufweisen, in bekannter Weise aufgebracht werden.

**Claims**

1. Branched thermoplastic polycarbonates, characterised in that they contain hydroxybenzotriazoles corresponding to Formula I in quantities of from 0.05% by weight to 15% by weight

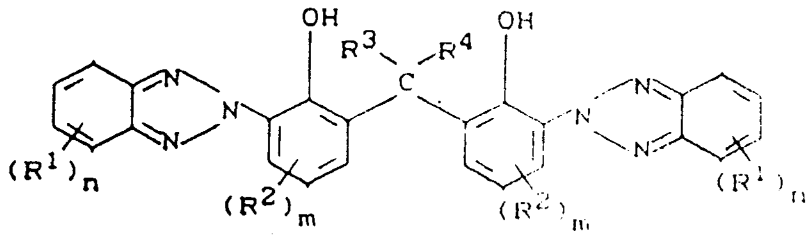

I

in which Formula,
$R^1$ = H, $R^2$ = H or $C_1$-$C_9$-alkyl, $R^3$ = H, $R^4$ = H, "m" = 1 and "n" = 1.

2. The use of polycarbonates of Claim 1 for the production of sheets, in which the proportion of hydroxybenzotriazoles of Formula I amount to 0.05% by weight to 1% by weight.

3. Use according to Claim 2, the hydroxybenzotriazole content of Formula I amounting to 0.2% by weight to 0.8% by weight.

4. Use of the polycarbonates of Claim 1 for the production of multilayered plastics boards in which the layer thickness of the UV absorbent layer is from 10 µm to 50 µm and the hydroxybenzotriazole content of Formula I is from 1% by weight to 15% by weight in the UV absorbent layer.

5. Use according to Claim 4, the hydroxybenzotriazole content of Formula 1 amounting to 5% by weight to 10% by weight in the UV absorbent layer.

6. A process for the stabilization of branched thermoplastic polycarbonates, characterised in that from 0.05% by weight to 15% by weight of UV absorbent of Formula I of Claim 1 and optionally reinforcing materials, fillers, flame-retardants, dyes, pigments, lubricants and/or mould release agents are incorporated in the branched thermoplastic polycarbonates by means of conventional mixing apparatus.

7. A process for the production of multilayered plastics sheets by the (multiple) coextrusion process, characterised in that the weight bearing core layer consists of thermoplastic synthetic resin and in that UV absorbent layers of branched, thermoplastic polycarbonate containing from 1% by weight to 15% by weight of UV absorbent of Formula I of Claim 1 and having a thickness of from 10 µm to 50 µm are applied in known manner to one or both sides of the core layer.

**Revendications**

1. Polycarbonates thermoplastiques ramifiés, caractérisés en ce que qu'ils contiennent, à raison de 0,05 à 15% en poids, des hydroxybenzothiazols de formule I

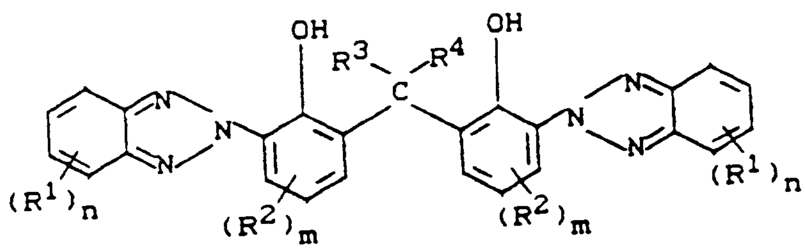

I

dans laquelle
$R^1$ = H, $R^2$ = H ou alkyle en $C_1$-$C_9$, $R^3$ = H, $R^4$ = H, "m" = 1 et "n" = 1.

2. Utilisation des polycarbonates de la revendication 1 pour la fabrication de panneaux, dans lesquels la teneur en hydroxybenzothiazols de formule I est de 0,05% à 1% en poids.

3. Utilisation selon la revendication 2, dans laquelle la teneur en hydroxybenzotriazols de formule I est de 0,2 à 0,8% en poids.

4. Utilisation des polycarbonates selon la revendication 1 pour fabriquer des panneaux en matière plastique dans lesquels l'épaisseur de la couche absorbant les rayons UV est de 10 à 50 µm et la teneur de la couche absorbant les rayons UV en hydroxybenzotriazol de formule I est de 1 à 15% en poids.

5. Utilisation selon la revendication 4, dans laquelle la teneur en hydroxybenzothiazol de formule I de la couche absorbant les rayons UV est de 5 à 10%.

6. Procédé pour stabiliser les polycarbonates thermoplastiques à chaîne ramifiée, caractérisé en ce que l'on incorpore dans les polycarbonates thermoplastiques ramifiés 0,05 à 15% en poids d'absorbant d'UV répondant à la formule I de la revendication 1 ainsi qu'éventuellement des substances de renforcement, des charges, des agents pare-flamme, des colorants, des pigments, des lubrifiants et/ou des agents de démoulage au moyen des groupes mélangeurs usuels.

7. Procédé pour fabriquer des panneaux multicouches en matière plastique selon le procédé de (multi)-co-extrusion, caractérisé en ce que la couche de l'âme portante est composée de matière synthétique thermoplastique et que l'on applique de manière connue, sur une face ou sur les deux faces de l'âme, des couches absorbant les rayons UV composées de polycarbonate thermoplastique à chaîne ramifiée, contenant 1 à 15% en poids d'absorbant d'UV de formule I selon la revendication I et présentant une épaisseur de 10 à 50 µm.